# EUROPEAN PATENT APPLICATION

(11) **EP 4 607 879 A1**
(43) Date of publication of application: **27.08.2025**
(21) Application number: 25156670.9
(22) Date of filing: 07.02.2025
(51) Int. Cl.: H04L 41/16, H04W 24/02

(54) **APPARATUS AND METHOD FOR FEDERATED LEARNING IN AN OPEN RADIO ACCESS NETWORK**

(30) Priority: 20.02.2024 FI 20245206
(71) Applicant: Nokia Solutions and Networks Oy, 02610 Espoo (FI)
(72) Inventor: RAMACHANDRAN, Srilatha, 560093 Bengaluru (IN); GOSHI, Ece, 80807 Munich (DE); ABDELKADER, Abdelrahman, 80809 Munich (DE); URIE, Alistair, 92130 Issy les Moulineaux (FR); NANAVATY, Niraj, 560037 Bangalore (IN); GHAROUNI, Afsaneh, 81541 Munich (DE)
(74) Representative: Novagraaf Technologies

(57) **Abstract**

A federated learning (FL) procedure is disclosed between a SMO / Non-RT RIC acting as FL aggregator and a Near-RT RIC /E2 node acting as a FL client. The SMO configures a plurality of Near-real time radio access network intelligence controllers (Near-RT RIC) or E2 nodes of the an open radio access network to perform local training of a machine learning local model available in each of the Near-real time radio access network intelligence controllers (Near-RT RIC) or E2 nodes and generate a trained machine learning local model. The trained machine learning local models are then aggregated by the SMO to generate a machine learning global model which is distributed to the Near-RT RIC /E2 nodes. Configuration of the local model in the Near-RT RIC /E2 nodes can be achieved via O1 configuration management notification.

## Description

### TECHNICAL FIELD

Various example embodiments relate generally to apparatus and methods for federated learning in an open radio access network.

### BACKGROUND

Artificial Intelligence (Al) / Machine learning (ML) is a field of study that provides computers the ability to learn without being explicitly programmed. The ability to learn useful information from input data can help improve RAN or network performance. Different ML algorithms can be deployed and realized in an O-RAN architecture. As described in section 3.5 of the ORAN specification O-RAN.WG2.AIML-v01.03, this includes federated learning.

Federated learning is a well-known distributed learning methodology where multiple AI/ML entities collaboratively train an AI/ML model. Instead of gathering training data into a central server, federated learning keeps the training data decentralized. AI/ML models are trained locally in distributed entities, and the ML local models are aggregated by a central server. The central server orchestrates the federated learning.

The ORAN specification O-RAN.WG2.AIML-v01.03O-RAN describes that the Non-real time radio access network intelligence controller (Non-RT RIC) in the service management and orchestration framework (SMO) can serve as the central server in the federated learning, and its connected Near-real time radio access network intelligence controllers (Near-RT RICs) can serve as distributed AI/ML entities. The federated learning procedure described in O-RAN.WG2.AIML-v01.03O-RAN comprises ML model download and upload between Non-RT RIC and Near-RT RICs over the O1 or the A1 interfaces.

The present disclosure relates to an alternative federated learning implementation in an open radio access network which provides various advantages.

### SUMMARY

According to some aspects, there is provided the subject matter of the independent claims. Some further aspects are defined in the dependent claims.

In a first aspect, a federated learning aggregator method is disclosed for a service management and orchestration framework (SMO) in an open radio access network (O-RAN). The disclosed federated learning aggregator method comprises : configuring a plurality of Near-real time radio access network intelligence controllers (Near-RT RIC) or E2 nodes of the an open radio access network to perform local training of a machine learning local model available in each of the Near-real time radio access network intelligence controllers (Near-RT RIC) or E2 nodes and generate a trained machine learning local model; reading the trained machine learning local models ; aggregating the trained local models to obtain a machine learning global model ; distributing the machine learning global model.

For example, the service management and orchestration framework comprises a Non-real time radio access network intelligence controller (Non-RT RIC) and the method is performed at the Non-real time radio access network intelligence controller.

For example, configuring a Near-real time radio access network intelligence controller or an E2 node comprises sending by the service management and orchestration framework to the Near-real time radio access network intelligence controllers or E2 nodes, an O1 configuration management notification for managing one or more attributes of the machine learning local model.

In a first embodiment of the disclosed federated learning aggregator method, configuring a Near-real time radio access network intelligence controller comprises : - sending an A1 query policy request to the Near-real time radio access network intelligence controller, said A1 query policy request comprising a policy type identifier indicative of a federated learning policy type; - receiving a A1 query policy response from the Near-real time radio access network intelligence controller, said A1 query policy response comprising a policy type information corresponding to the federated learning policy type already created in the Near-real time radio access network intelligence controller; - sending to said Near-real time radio access network intelligence controller, a first O1 configuration management notification for managing one or more attributes of the machine learning local model; - sending an A1 create policy request to said Near-real time radio access network intelligence controller to create a policy, said A1 create policy request comprising at least one or more federated learning objectives and one or more federated learning resources to be used by the Near-real time radio access network intelligence controller to perform local training of said machine learning local model.

In the first embodiment of the disclosed federated learning aggregator method, reading the trained machine learning local model can be performed after receiving an A1 policy status information from the Near-real time radio access network intelligence controller, indicative of a completion of the local training. Reading the trained machine learning local model can comprise sending a second O1 configuration management notification to the Near-real time radio access network intelligence controller for reading the trained machine learning local model.

In a second embodiment of the disclosed federated learning aggregator method, configuring a Near-real time radio access network intelligence controller comprises : - sending a training discovery request to the Near-real time radio access network intelligence controller (Near-RT RIC); - receiving an A1 training discovery response from the Near-real time radio access network intelligence controller, said A1 training discovery response comprising at least one available training service in the Near-real time radio access network intelligence controller; - sending to the Near-real time radio access network intelligence controller, a first O1 configuration management notification for managing one or more attributes of the machine learning local model.

For example, in the second embodiment of the disclosed federated learning aggregator method, reading the trained machine learning local model comprises sending a second O1 configuration management notification to the Near-real time radio access network intelligence controller for reading the trained machine learning local model.

Alternatively in the second embodiment of the disclosed federated learning aggregator method, reading the trained machine learning local model comprises : - receiving an A1 training status notification from the Near-real time radio access network intelligence controller, said A1 training status notification being indicative of a completion of the local training and comprising a location of the trained machine learning local model; - reading the trained machine learning local model from said location.

In a third embodiment of a the disclosed federated learning aggregator method, configuring a Near-real time radio access network intelligence controller or an E2 node comprises : - sending an O1 NtfSubscriptionControl notification to the Near-real time radio access network intelligence controller (Near-RT RIC) or E2 node comprising an address of a federated learning client in the Near-real time radio access network intelligence controller or E2 node and a notification type chosen between at least a periodic local training and a finish local training ; - sending a first O1 configuration management notification to the Near-real time radio access network intelligence controller or the E2 node for managing one or more attributes of the ML local model.

In the third embodiment the disclosed federated learning aggregator method, wherein reading the trained machine learning local model comprises : receiving an O1 NtfSubscriptionControl notification from the Near-real time radio access network intelligence controller or the E2 node.

In a second aspect, a federated learning client method is disclosed for a Near-real time radio access network intelligence controller (Near-RT RIC) or a E2 node of an open radio access network (O-RAN). The disclosed federated learning client method comprises: getting configured by a service management and orchestration framework (SMO) in the an open radio access network to perform local training of a machine learning local model available in the Near-real time radio access network intelligence controller (Near-RT RIC) or E2 node; and performing local training of the machine learning local model based on the received configuration information.

For example, getting configured by a service management and orchestration framework comprises receiving a O1 configuration management notification from the service management and orchestration framework, the O1 configuration management notification for managing one or more attributes of the machine learning local model.

In a first embodiment of the federated learning client method, when applied in a Near-real time radio access network intelligence controller (Near-RT RIC) of an open radio access network (O-RAN), getting configured by a service management and orchestration framework comprises :- receiving an A1 query policy request from the service management and orchestration framework, said A1 query policy request comprising a policy type identifier indicative of a federated learning policy ; - sending an A1 query policy response comprising policy type information to the service management and orchestration framework ; - receiving, from the service management and orchestration framework, an O1 configuration management notification for managing one or more attributes of the ML local model; - receiving an A1 create policy request from the service management and orchestration framework, said A1 create policy request comprising one or more federated learning objectives and one or more federated learning resources, to be used to perform local training of the machine learning local model.

In a second embodiment of the federated learning client method, when applied in a Near-real time radio access network intelligence controller (Near-RT RIC) of an open radio access network (O-RAN), getting configured by a service management and orchestration framework comprises : - receiving an A1 training discovery request from the service management and orchestration framework ; - sending an A1 training discovery response to the service management and orchestration framework ; said A1 training discovery response comprising at least one available training service in the Near-real time radio access network intelligence controller ; and - receiving, from the service management and orchestration framework, an O1 configuration management notification for managing one or more attributes of the ML local model.

In the second embodiment, the federated learning client method further comprises sending an A1 training status notification to the service management and orchestration framework, said A1 training status notification being indicative of a completion of the local training and comprising a location of the trained machine learning local model.

In a third embodiment of the federated learning client method, getting configured by a service management and orchestration framework comprises : - receiving an O1 NtfSubscriptionControl notification from the service management and orchestration framework, said O1 NtfSubscriptionControl notification comprising at least an address of a federated learning client in the Near-real time radio access network intelligence controller or E2 node; - receiving, from the service management and orchestration framework, a first O1 configuration management notification for managing one or more attributes of the ML local model.

In the third embodiment of the federated learning client method, said O1 NtfSubscriptionControl notification further comprises a notification type chosen between at least a periodic local training and a finish local training, and the federated learning client repeats the local training until a trigger is received to finish training when the notification type is the periodic local training.

In a third aspect, an apparatus is disclosed comprising means configured to perform the federated learning aggregator method as disclosed herein.

For example, an apparatus is disclosed comprising at least one processor and at least one memory storing instructions that, when executed by the at least one processor, cause the apparatus at least to perform the federated learning aggregator method as disclosed herein.

In a fourth aspect, an apparatus is disclosed comprising means configured to perform the federated learning client method as disclosed herein.

For example, an apparatus is disclosed comprising means, for example at least one processor and at least one memory storing instructions, that, when executed by the at least one processor, cause the apparatus at least to perform the federated learning client method as disclosed herein.

In a fifth aspect, a computer program is disclosed comprising instructions which when executed by an apparatus cause the apparatus to perform the federated learning aggregator method or the federated learning client method as disclosed herein.

A non-transitory storage medium is also disclosed storing instructions which when executed by an apparatus cause the apparatus to perform the federated learning aggregator method or the federated learning client method as disclosed herein.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG.1. is a block diagram of a federated learning model in a wireless network.
FIG.2 is a schematic representation of an ORAN architecture.
FIG.3 is a schematic representation of the interfaces between the service management and orchestration framework (SMO) and the RAN network functions.
FIG.4 is a flow chart representing a high-level signaling flow between the different elements of the architecture according to an aspect of the present disclosure.
FIG.5 is a flow chart representing a detailed signaling flow between the different elements of the architecture according to a first embodiment.
FIG.6 is a flow chart representing a detailed signaling flow between the different elements of the architecture according to a second embodiment.
FIG.7 is a flow chart representing a detailed signaling flow between the different elements of the architecture according to a third embodiment.
FIG.8 is an alternative implementation of the embodiment of FIG.7.
FIG.9 is a schematic representation of an apparatus suitable for implementing various aspects of the disclosure.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

Many applications in mobile networks require a large amount of data from multiple distributed sources (like user equipment or base stations) to be used to train a single common model. To minimize the data exchange between the distributed sources where the data is generated and the centralized entity where the common model needs to be created, the concept of Federated Learning (FL) may be applied. Federated learning has also the advantage of helping with keeping the data confidential.

Federated learning is a form of machine learning where instead of model training at a single entity, different versions of the model (referred to a ML local models) are trained at the different distributed sources.

Federated learning is different from distributed machine learning, where a single machine learning model is trained at distributed entities to use computation power of the different entities.

In federated learning each distributed entity in the federated learning scenario has its own local training data which may not come from the same distribution as the data at other entities. Each distributed entity computes parameters for its ML local model. And the central entity does not compute a part of ML global model but combines (or aggregate) parameters of all the ML local models to generate a ML global model.

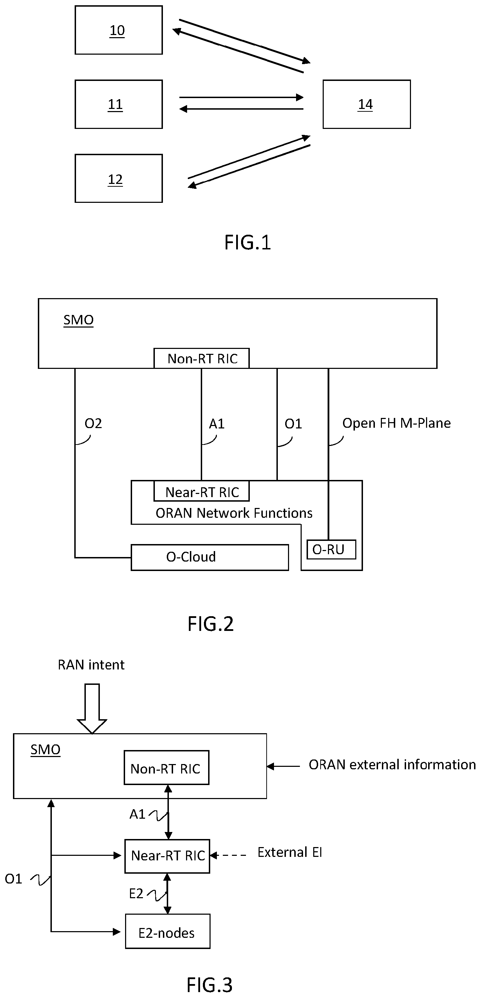

An objective of this approach is to keep the training dataset where it is generated and perform the model training locally at each individual learner in the federation. Instead of transferring raw training dataset to a central entity in charge of training a ML global model, after training, each individual local learner transfers its ML local model parameters to an aggregator. The aggregator utilizes the ML local model parameters to update a ML global model which may eventually be fed back to the individual local learners for further iterations until a final ML global model converges. As a result, each individual local learner benefits from the datasets of the other local learners only through the ML global model, shared by the aggregator, without explicitly accessing high volume of privacy-sensitive data available at the other local learners. This concept is illustrated in FIG.1, where user equipment 11, 12, 13 serve as local learners and a gNB functions 14 serve as an aggregator.

FIG.2 is a schematic representation of an ORAN architecture. In the O-RAN architecture, a service management and orchestration framework (SMO) is responsible for RAN domain management and provides the key capabilities for performing FCAPS (Fault, Configuration, Accounting, Performance, and Security) management, RAN optimization through a Non-Real-Time Radio Access Network Intelligence Controller function (Non-RT RIC), O-Cloud management, orchestration and workflow management. These capabilities are provided through various interfaces, namely A1, O1, O2 and Open Fronthaul (FH) M-plane.

FIG.3 is a schematic representation of the interfaces between the service management and orchestration framework (SMO) and the RAN network functions.

As illustrated in FIG.3, within the logical architecture of O-RAN, the radio side is composed of a Near-Real-Time Radio Access Network Intelligence Controller (Near-RT RIC) function and E2 nodes. The E2 nodes typically comprise the following ORAN network function: an ORAN Central Unit Control Plane (O-CU-CP), an ORAN Central Unit User Plane (O-CU-UP), and an ORAN Distributed Unit (an O-CU-UP). The Near-RT RIC and the E2 nodes are interfaced through an E2 interface. The management side of the O-RAN architecture includes a Service Management and Orchestration framework (SMO) which contains a Non-Real-Time Radio Access Network Intelligence Controller function (Non-RT RIC). The Non-RT RIC and the Near-RT RIC are interfaced through an A1 interface. The parts of the Service Management and Orchestration framework (SMO) other than the Non-RT RIC are directly interfaced with the Near-RT RIC and the E2 nodes via an O1 interface.

The Non-RT RIC is composed of two sub-functions, namely Non-RT RIC framework and Non-RT RIC applications (known as rApps). rApps are modular software applications or functions designed to provide specific functionalities related to the control, management, optimization, and automation of the radio access network. Non-RT RIC framework logically terminates the A1 interface and exposes required services to rApps via a SMO-internal R1 interface (not represented in the figures). rAapps utilize the exposed R1 services to perform RAN optimization in the form of policies and (re)configuration which are then communicated through the A1, O1, O2 and Open FH M-plane interfaces.

The Near-RT RIC through the E2 interface communicates with E2 Nodes for time sensitive management and control of the radio resources, such as interference management, handover management, Quality of Service (QoS) management, and radio connection management. It collects real-time data from various network elements such as base stations and user equipment and makes intelligent decisions and adjustments to meet the QoS service requirements and optimize network performance.

The Near-RT RIC hosts Near-RT RIC applications (known as xApps) and a Near-RT RIC framework comprising common functions to support and be used by the xApps.

The A1 interface is established between the Non-RT RIC and the Near-RT RIC and supports three categories of services : a policy management service (known as A1-P), an enrichment information service (known as A1-EI) and ML model management service (know as A1-ML).

The purpose of A1 policies provided via the A1-P policy management services is to enable the Non-RT RIC to guide the Near-RT RIC and consequently the RAN for better fulfilment of the RAN intent. The RAN intent represents the service level agreements (SLAs) for the RAN to fulfil for all or a subset of its users. By utilizing the observability over O1, and the A1 policy feedback, the Non-RT RIC can conclude whether the RAN intent is fulfilled or not. There are various types of A1 policies identified by a policy type identifier. Each A1 policy has a policy scope and one or more policy statements. The policy scope defines what the policy statements are to be applied on. The policy statements define the policy goals, the policy objectives, and the policy resources.

Enrichment information services (A1-EI) enable to further optimize the RAN operations by collecting data that may be internal or external to RAN domain.

ML model management services (A1-ML) provide the functionalities to train and deploy ML models for RAN optimization.

The O1 interface is between the service management and orchestration framework and the O-RAN managed elements (Near-RT RIC and E2 nodes). It provides the related management and orchestration services to the managed elements (Near-RT RIC and E2 nodes) that terminate the O1 interface. The services provided are related to provisioning, fault supervision, performance assurance, tracing, file management, and physical NF management. These services are supported via defined IOCs (information object classes) that are defined in 3GPP specifications (TS 28.622).

E2 Nodes and Near-RT RICs are powerful sources of data which can be leveraged in numerous use cases such as Mobility Optimization for reducing ping pong rate, Interference Management Optimization, Energy Saving Related Cell Switch Off Optimization, UE Positioning Related SRS Configurations. However, as previously explained, with a traditional learning scheme, all the data from different E2Node(s) and/or Near-RT RIC(s) should be collected in one central point to train a ML global model. Carrying all this information to a central point requires consumption of excessive resources, e.g., energy, storage, computational resources which are not always available at the E2 Node and Near-RT RIC level.

Alternatively, central intelligence across Near-RT RICs and E2 nodes can be harnessed at the SMO through a federated learning process. Federated learning can enable working on local data sets in the E2 nodes or the Near-RT RIC, while the SMO can provide the computational the capacity needed for the federated learning operations, directly or via its Non-RT RIC.

The disclosed method and apparatus integrate the federated learning operation in ORAN considering E2 Nodes and Near-RT-RIC as local FL clients and the SMO, directly or via its Non-RT RIC, as FL server (or aggregator).

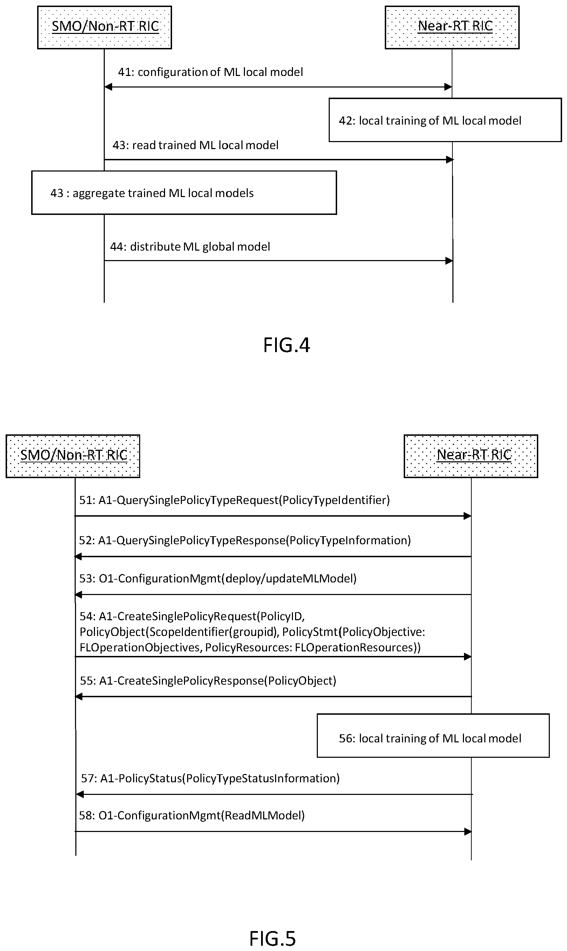

A generic procedure for federated learning in O-RAN as disclosed herein will now be described with reference to FIG.4. In FIG.4, the SMO act as a FL server (directly or via its Non-RT RIC) and several Near-RT RICs or the E2 nodes act as FL clients. In 41, the SMO/Non-RT RIC configures the Near-RT RICs or the E2 nodes to perform local training of a ML local model available in the Near-RT RICs or E2 nodes. Configuration is achieved through an exchange of one or more messages. In 42, once configured, each of the Near-RT RICs or E2 nodes performs local training of its ML local model. In 43, the SMO reads the trained ML local models of each of the Near-RT RICs or E2 nodes. Then in 44, the SMO aggregates the trained ML local models to obtain a ML global model. And in 45, the SMO distributes the ML global model.

In the disclosed federated leaning procedure, there is no uploading of a model between the FL server (the SMO) and the FL client (the Near-RT RIC or the E2 node). The model is not moved. Instead, a management operation (configuration) is performed onto the ML local model in the Near-RT RIC or E2 node.

In the Near-RT RIC or E2 node, an application (xApp) where the ML model which needs to be deployed can be considered a managed object instance (MOI) according to 3GPP language. This managed object instance has attributes in its Information model which can be managed through signaling procedures. For example, the configuration step described in FIG.4 comprises sending, by the SMO to the Near-RT RIC or the E2 node, an O1 configuration management notification to manage the attributes of the ML local model e.g. modify them. The attributes of the ML local model comprise at least an identifier of the machine learning model (MLModelld) and a configuration of the machine learning model (MLModelConfig). Reference is made to the specification document O-RAN Work Group 10 (OAM for O-RAN) O-RAN O1 Interface Specification.

In other words, the ML local model is already part of the application in the Near-RT RICs or E2 nodes and the disclosed federated learning procedure configures it to update its attributes. O1 defined configuration management procedures are used to perform configuration operations on a machine learning model in the Near-RT RIC.

The disclosed federated learning procedure can be implemented between the Non-RT RIC in the SMO and a Near-RT RIC, or between the SMO part which is not the Non-RT RIC and a Near-RT-RIC or an E2 node.

In the following of the description, three embodiments of the federated learning procedure of FIG.4 will be described in more details. This is not limitative. Alternative embodiments are possible which can be derived from the present disclosure by the skilled person.

In the embodiment of FIG.5, a policy type is defined for federated learning and the existing A1 policy procedures are used to carry the federated learning messages.

Reference is made to the specification document O-RAN.WG2.A1TD-v05.01 for the definition of A1 policy types and to specification document O-RAN.WG2.A1UCR-R003-v01.01, in particular sections 6.1.3.2, 6.3.3.1 and 6.7.3.2 for the definition A1 policy procedures used herein.

As illustrated in FIG.5, in 51 the Non-RT RIC sends an A1-QuerySinglePolicyTypeRequest message to the Near-RT RIC. The A1-QuerySinglePolicyTypeRequest message has a PolicyTypeldentifier as parameter which is in this case is the FL policy type identifier (denoted FLPolicyTypeldentifier). In 52, the Near-RT RIC sends an A1-QuerySinglePolicyTypeResponse to the Non-RT RIC. The A1-QuerySinglePolicyTypeResponse has a PolicyTypelnformation as parameter. In this case, the PolicyTypelnformation relates to the FL policy type already created in the Near-RT RIC. It is used to provide details about the new policy type created for performing federated learning operations to the Non-RT RIC. In 53, the SMO/Non-RT RIC sends a first O1 configuration management notification to the Near-RT RIC for managing one or more attributes of the ML local model. In FIG.5 the first O1 configuration management notification is denoted O1-ConfigurationMgmt(deploy/updateMLModel). In 54, the Non-RT RIC sends an A1-CreateSinglePolicyRequest to the Near-RT RIC. This A1-CreateSinglePolicyRequest has at least the following parameters: a policy identifier (Policyld) and a policy object. The policy object includes a scope identifier (Scopeldentifier(groupid)) and a policy statement (PolicyStmt). The policy statement includes a policy objective (PolicyObjective: FLOperationObjectives) and policy resources (PolicyResources: FLOperationResources). The parameters PolicyObjective and PolicyResources indicate the federated learning policy objectives and the federated learning policy resources respectively. In 55, the Near-RT RIC sends an A1-CreateSinglePolicyResponse to the Non-RT RIC with the policy object as parameter. In 56, after reception of the A1-CreateSinglePolicyRequest, the Near-RT RIC creates the policy to perform training of the machine learning local model. In 57, upon completion of the training, the Near-RT RIC send an A1-PolicyStatus to the Non-RT RIC with PolicyTypeStatuslnformation as parameter. In 58, the SMO/Non-RT RIC sends a second O1 configuration management notification for reading the trained machine learning local model. In FIG.5, the second O1 configuration management notification is denoted O1-ConfigurationMgmt(ReadMLModel).

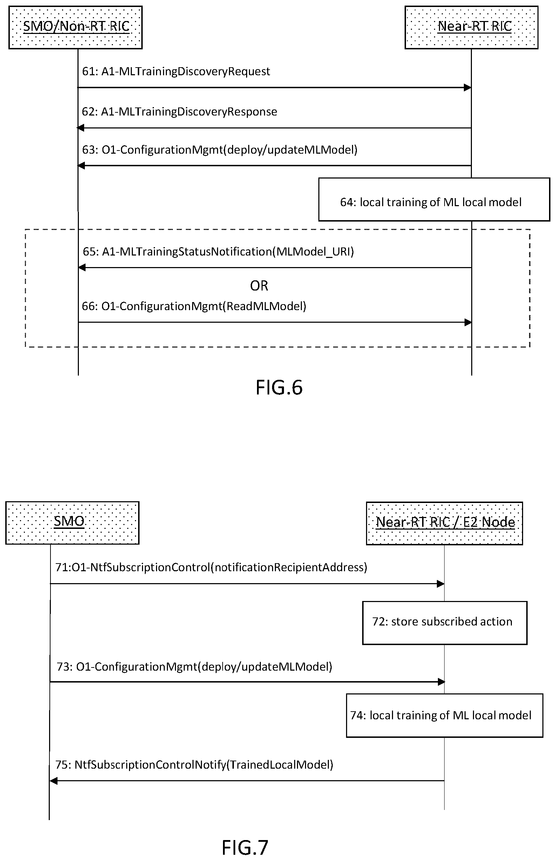

FIG.6 is a flow chart representing a detailed signaling flow between the different elements of the architecture according to a second embodiment. In the embodiment depicted in FIG.6, new A1 dedicated services are proposed to implement the disclosed federated learning procedure. In 61, the Non-RT RIC sends an A1-MLTrainingDiscoveryRequest to the Near -RT RIC to discover available machine learning training services in the Near-RT RIC. In 62, the Near-RT RIC responds by sending a A1-MLTrainingDiscoveryResponse to the Non-RT RIC for providing the Non-RT RIC with available machine learning training services with federated learning support. In 63, the SMO/Non-RT RIC sends a first O1 configuration management notification to the Near-RT RIC for managing one or more attributes of the ML local model. In FIG.6 the first O1 configuration management notification is denoted O1-ConfigurationMgmt(deploy/updateMLModel). In 64, the Near-RT RIC performs training of the machine learning local model. In 55, the Near-RT RIC sends an A1-MLTrainingStatusNotification to the Non-RT RIC. This A1-MLTrainingStatusNotification has as parameter a location to the trained machine learning local model (denoted MLModel_URI in FIG.6). As an alternative to step 55, in 56, the SMO/ Non-RT RIC sends a second O1 configuration management notification for reading the trained machine learning local model. In FIG.6, the second O1 configuration management notification is denoted O1-ConfigurationMgmt(ReadMLModel).

FIG.7 is a flow chart representing a detailed signaling flow between the different elements of the architecture according to a third embodiment. This third embodiment makes use of the O1 interface exclusively (not the A1 interface). It can be implemented between the part of the SMO other than the Non-RT RIC and a Near-RT RIC or an E2 node.

In 71, the SMO sends an O1-NtfSubscriptionControl notification to the Near-RT RIC / E2 node. This O1-NtfSubscriptionControl notification comprises an address of a federated learning client as parameter (notificationRecipientAddress: FLOperationClient). Upon reception, the FL client (Near-RT RIC or E2 node) stores the subscribed action. In 73, the SMO sends a first O1 configuration management notification to the Near-RT RIC / E2 node for managing one or more attributes of the ML local model. In 74, the Near-RT RIC / E2 node performs local training. In 75, upon training completion, the Near-RT RIC / E2 node sends an O1-NtfSubscriptionControlNotify notification to the SMO which comprises the trained machine learning local model (TrainedLocaIModel).

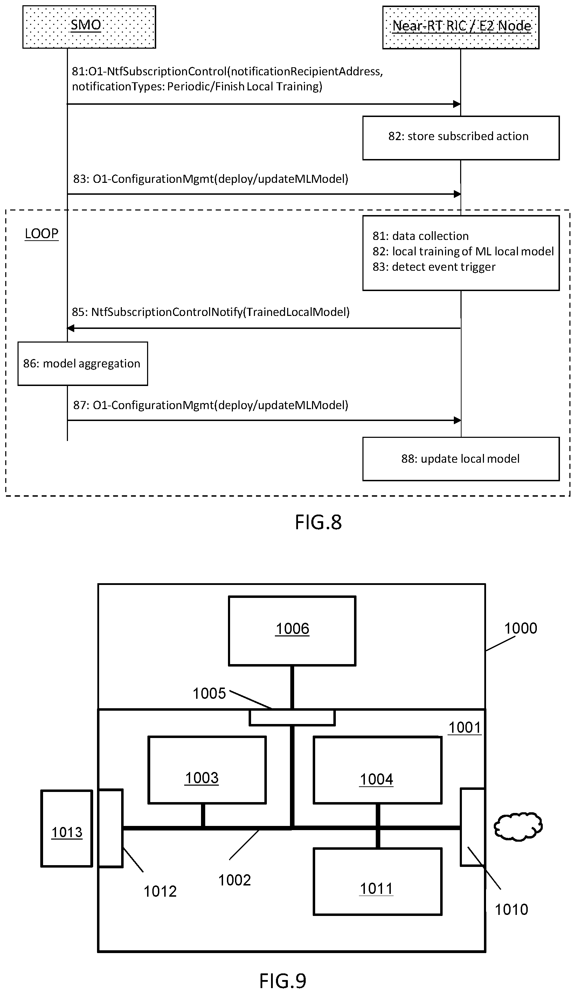

In an embodiment illustrated in FIG.8, the O1-NtfSubscriptionControl notification sent in 81 further comprises a parameter indicative of a type of notification (notificationTypes: Periodic/FinishLocalTraining) the notification type being chosen between at least a periodic local training and a finish local training. In this case, the federated learning client (Near-RT RIC / E2 node) repeats the local training until a trigger is received to finish training. In this case, the Step 74 is detailed into three steps 81, 82 and 83, corresponding respectively to collection of training data, federated learning local training, and detection of the trigger. Upon detection of the trigger, the notification O1-NtfSubscriptionControlNotify is sent to the SMO (step 85 corresponding to step 75 in FIG.7). In 86, the SMO aggregates the trained machine learning local models. In 87, the SMO deploys the global model through an O1 notification (O1-DeployAggregatedFLModel). In 88, the FL client (Near-RT RIC or E2 node) updated its machine learning local model according to the global model. Steps 81 to 88 can be executed in a loop.

Periodic local training with a looping mechanism can also be used with the embodiments depicted with reference to FIG.5 and FIG.6.

FIG.9 depicts a high-level block diagram of an apparatus 1000 suitable for implementing various aspects of the disclosure. For example, a network apparatus as disclosed above can be implemented in the form of apparatus 1000. Although illustrated in a single block, in other embodiments the apparatus 1000 can also be implemented using parallel and/or distributed architectures, for example it can be distributed on different hardware platforms and/or different locations.

According to an exemplary embodiment, depicted in FIG.10, apparatus 1000 comprises a printed circuit board 1001 on which a communication bus 1002 connects a processor 1003 (e.g., a central processing unit "CPU"), a random access memory 1004, a storage medium 1011, possibly an interface 1005 for connecting one or more input/output devices 1006 such as a display, a mouse or trackpad, a keyboard, etc... a wireless network interface 1010 and/or a wired network interface 1012. Depending on the use case, the apparatus may implement only part of the above. Certain modules of FIG.10 may be internal or connected externally, in which case they do not necessarily form integral part of the apparatus itself. E.g. a display may be connected to the apparatus only under specific circumstances, or the apparatus may be controlled through another device with a display, i.e. no specific display and interface 1005 are required for such an apparatus. Memory 1011 contains software code which, when executed by processor 1003, causes the apparatus to perform the methods described herein. In an exemplary embodiment, a detachable storage medium 1013 such as a USB stick may also be connected. For example, the detachable storage medium 1013 can hold the software code to be uploaded to memory 1011.

The processor 1003 may be any type of processor such as a general-purpose central processing unit ("CPU") or a dedicated microprocessor such as an embedded microcontroller or a digital signal processor ("DSP").

In addition, apparatus 1000 may also include other components typically found in computing systems, such as an operating system, queue managers, device drivers, or one or more network protocols that are stored in memory 1011 and executed by the processor 1003.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from the spirit and scope of the disclosure as determined based upon the claims and any equivalents thereof.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A federated learning aggregator method for a service management and orchestration framework (SMO) in an open radio access network (O-RAN), the method comprising :
- configuring a plurality of Near-real time radio access network intelligence controllers (Near-RT RIC) or E2 nodes of the open radio access network to perform local training of a machine learning local model available in each of the Near-real time radio access network intelligence controllers (Near-RT RIC) or E2 nodes and generate a trained machine learning local model;
- reading the trained machine learning local models ;
- aggregating the trained local models to obtain a machine learning global model ;
- distributing the machine learning global model.

2. The method as claimed in claim 1, wherein the service management and orchestration framework comprises a Non-real time radio access network intelligence controller (Non-RT RIC) and the method is performed at the Non-real time radio access network intelligence controller.

3. The method as claimed in any of claims 1 or 2, wherein configuring a Near-real time radio access network intelligence controller or an E2 node comprises sending by the service management and orchestration framework to the Near-real time radio access network intelligence controllers or E2 nodes, an O1 configuration management notification for managing one or more attributes of the machine learning local model.

4. The method as claimed in any of claims 1 or 2, wherein configuring a Near-real time radio access network intelligence controller comprises:
- sending an A1 query policy request to the Near-real time radio access network intelligence controller, said A1 query policy request comprising a policy type identifier indicative of a federated learning policy type;
- receiving a A1 query policy response from the Near-real time radio access network intelligence controller, said A1 query policy response comprising a policy type information corresponding to the federated learning policy type already created in the Near-real time radio access network intelligence controller;
- sending to said Near-real time radio access network intelligence controller, a first O1 configuration management notification for managing one or more attributes of the machine learning local model;
- sending an A1 create policy request to said Near-real time radio access network intelligence controller to create a policy, said A1 create policy request comprising at least one or more federated learning objectives and one or more federated learning resources to be used by the Near-real time radio access network intelligence controller to perform local training of said machine learning local model;
and optionally wherein reading the trained machine learning local model is performed after receiving an A1 policy status information from the Near-real time radio access network intelligence controller, indicative of a completion of the local training, and comprises sending a second O1 configuration management notification to the Near-real time radio access network intelligence controller for reading the trained machine learning local model.

5. The method as claimed in any of claims 1 or 2, wherein configuring a Near-real time radio access network intelligence controller comprises:
- sending a training discovery request to the Near-real time radio access network intelligence controller (Near-RT RIC);
- receiving an A1 training discovery response from the Near-real time radio access network intelligence controller, said A1 training discovery response comprising at least one available training service in the Near-real time radio access network intelligence controller;
- sending to the Near-real time radio access network intelligence controller, a first O1 configuration management notification for managing one or more attributes of the machine learning local model,
and optionally wherein reading the trained machine learning local model comprises:
- sending a second O1 configuration management notification to the Near-real time radio access network intelligence controller for reading the trained machine learning local model, or
- receiving an A1 training status notification from the Near-real time radio access network intelligence controller, said A1 training status notification being indicative of a completion of the local training and comprising a location of the trained machine learning local model; and reading the trained machine learning local model from said location.

6. The method as claimed in any of claim 1 or 2, wherein configuring a Near-real time radio access network intelligence controller or an E2 node comprises :
- sending an O1 NtfSubscriptionControl notification to the Near-real time radio access network intelligence controller (Near-RT RIC) or E2 node comprising an address of a federated learning client in the Near-real time radio access network intelligence controller or E2 node and a notification type chosen between at least a periodic local training and a finish local training;
- sending a first O1 configuration management notification to the Near-real time radio access network intelligence controller or the E2 node for managing one or more attributes of the ML local model;
and optionally wherein reading the trained machine learning local model comprises receiving an O1 NtfSubscriptionControl notification from the Near-real time radio access network intelligence controller or the E2 node.

7. A federated learning client method for a Near-real time radio access network intelligence controller (Near-RT RIC) or a E2 node of an open radio access network (O-RAN), the method comprising:
- getting configured by a service management and orchestration framework (SMO) in the an open radio access network to perform local training of a machine learning local model available in the Near-real time radio access network intelligence controller (Near-RT RIC) or E2 node,
- performing local training of the machine learning local model based on the received configuration information.

8. The method as claimed in claim 7, wherein getting configured by a service management and orchestration framework comprises receiving a O1 configuration management notification from the service management and orchestration framework, the O1 configuration management notification for managing one or more attributes of the machine learning local model.

9. The method as claimed in claim 7, for a Near-real time radio access network intelligence controller (Near-RT RIC) of an open radio access network (O-RAN), wherein getting configured by a service management and orchestration framework comprises :
- receiving an A1 query policy request from the service management and orchestration framework, said A1 query policy request comprising a policy type identifier indicative of a federated learning policy;
- sending an A1 query policy response comprising policy type information to the service management and orchestration framework;
- receiving, from the service management and orchestration framework, an O1 configuration management notification for managing one or more attributes of the ML local model;
- receiving an A1 create policy request from the service management and orchestration framework, said A1 create policy request comprising one or more federated learning objectives and one or more federated learning resources, to be used to perform local training of the machine learning local model.

10. The method as claimed in claim 7, for a Near-real time radio access network intelligence controller (Near-RT RIC) of an open radio access network (O-RAN), wherein getting configured by a service management and orchestration framework comprises :
- receiving an A1 training discovery request from the service management and orchestration framework;
- sending an A1 training discovery response to the service management and orchestration framework ; said A1 training discovery response comprising at least one available training service in the Near-real time radio access network intelligence controller; and
- receiving, from the service management and orchestration framework, an O1 configuration management notification for managing one or more attributes of the ML local model.

11. The method as claimed in claim 10, further comprising sending an A1 training status notification to the service management and orchestration framework, said A1 training status notification being indicative of a completion of the local training and comprising a location of the trained machine learning local model.

12. The method as claimed in claim 7, wherein getting configured by a service management and orchestration framework comprises :
- receiving an O1 NtfSubscriptionControl notification from the service management and orchestration framework, said O1 NtfSubscriptionControl notification comprising at least an address of a federated learning client in the Near-real time radio access network intelligence controller or E2 node and optionally a notification type chosen between at least a periodic local training and a finish local training, and the federated learning client repeats the local training until a trigger is received to finish training when the notification type is the periodic local training;
- receiving, from the service management and orchestration framework, a first O1 configuration management notification for managing one or more attributes of the ML local model.

13. An apparatus comprising at least one processor and at least one memory storing instructions that, when executed by the at least one processor, cause the apparatus at least to perform the federated learning aggregator method as claimed in any of claims 1 to 6.

14. An apparatus comprising at least one processor and at least one memory storing instructions that, when executed by the at least one processor, cause the apparatus at least to perform the federated learning client method as claimed in any of claims 7 to 13.

15. A computer program comprising instructions which when executed by an apparatus cause the apparatus to perform the federated learning aggregator method as claimed in any of claims 1 to 6 or the federated learning client method as claimed in any of claims 7 to 13.
